# EUROPÄISCHE PATENTSCHRIFT

(11) **EP 0 616 153 B1**
(45) Veröffentlichungstag und Bekanntmachung des Hinweises auf die Patenterteilung: **30.07.1997**
(21) Anmeldenummer: 94102048.9
(22) Anmeldetag: 10.02.1994
(51) Int. Cl.: F16H 59/02, F16H 59/08, F16H 63/18, F16H 59/04

(54) **Schaltvorrichtung für ein Handschaltgetriebe eines Kraftfahrzeuges**
Gear-changing device for a manual gearbox of motor vehicles
Dispositif de changement de vitesse pour boîte de vitesses manuelle de véhicules à moteur

(30) Priorität: 18.03.1993 DE 4308637
(43) Veröffentlichungstag der Anmeldung: 21.09.1994
(73) Patentinhaber: Dr.Ing. H.C.F. PORSCHE AKTIENGESELLSCHAFT, 70432 Stuttgart (DE)
(72) Erfinder: Plocher, Bernd, D-72108 Rottenburg (DE); Kraxner, Dieter, D-75449 Wurmberg (DE); Hoebel, Peter, D-75242 Neu-hausen-Schellbronn (DE)

(56) Entgegenhaltungen:
- DE-A- 1 505 531
- DE-C- 943 742
- GB-A- 1 081 707
- REVUE AUTOMOBILE, 29. April 1993, BERNE Seiten 13 - 15 'Sur les traces de Senna, Prost & Cie'

## Beschreibung

Die Erfindung betrifft eine Schaltvorrichtung für ein Handschaltgetriebe eines Kraftfahrzeuges gemäß dem Oberbegriff des Patentanspruches 1.

Aus Kraftfahrzeugen mit einem von Hand zu schaltenden Getriebe ist es allgemein bekannt, Getriebegänge mittels eines in mehrere Stellungen einer Kulisse verschwenkbaren Wählhebels zu schalten. Der Wählhebel wird dabei in einer H-förmigen Kulisse bewegt, wobei nach dem Betätigen der Kraftfahrzeugkupplung einzelne, in Fahrtrichtung parallel zueinander liegende Gassen vorwählbar und durch anschließendes Vor- oder Zurückschwenken aus einer Mittellage heraus zumindest die Vorwärtsgänge schaltbar sind. Zwischen dem Wählhebel und dem Getriebe sind dabei z.B. als Gestänge oder Seilzüge ausgebildete Übertragungsglieder für die voneinander getrennte Übermittlung der Vorwähl- und der Schaltbewegung angeordnet. Solche Schaltvorrichtungen sind weit verbreitet und daher akzeptiert. Sie erfordern jedoch von der Bedienperson ein zu erlernendes Geschick bei der Betätigung, insbesondere bei der zunehmenden Anzahl von Handschaltgetrieben mit 5, 6 oder mehr Vorwärtsgängen. Je nach Lage dieser Gänge in der Schaltkulisse muß der Wählhebel ggf. zunächst aus der momentanen Gangstufe in eine Quergasse gezogen und entlang dieser vor eine weitere Schaltgasse und von dort aus entgegen oder in Richtung der vorherigen Schaltrichtung bewegt werden. Ein häufig mögliches Überspringen einzelner Gänge, z.B. beim direkten Hochschalten aus dem 3. in den 5. Vorwärtsgang erfordert zusätzliches Geschick.

Aus der DE-C-943 742 ist eine gattungsgemäße Schaltvorrichtung bekannt, bei der die einzelnen Schaltelemente (Schaltstangen) von einer innerhalb des Getriebes angeordneten Schaltwalze betätigt werden. Die Schaltwalze hat dazu für jede Schaltstange eine eingearbeitete Schaltnut, in die jeweils ein Steuerzapfen eingreift. Diese Steuerzapfen sind jeweils fest mit einer der Schaltstangen verbunden. Die Schaltwalze wird über ein Schrittschaltwerk vor- oder zurückgedreht, das über eine Stange mit einem Wählhebel verbunden ist. Durch Vor- oder Zurückschwenken des Wählhebels aus einer neutralen Mittellage werden dabei die einzelnen Getriebegänge geschaltet, wobei jeweils durch Schwenken des Wählhebels in eine Richtung aus der Neutrallage die Getriebegänge heraufgeschaltet bzw. bei entgegengesetzter Schaltbewegung die Getriebegänge heruntergeschaltet werden.

Aus "sport auto" 4/1988, Seite 126 bis 127 ist ein Handschaltgetriebe bekannt, bei dem die Übertragung der Schwenkbewegung des in einer H-förmigen Schaltgasse beweglichen Schalthebels über zwei Bowdenzüge an eine im Getriebe angeordnete Schaltwelle übertragen wird. Durch die beiden Bowdenzüge werden dabei die Schaltbewegung und die Vorwählbewegung des Schalthebels getrennt an die Schaltwelle des Handschaltgetriebes übertragen.

Eine weitere Schaltvorrichtung ist beispielsweise in der DE 39 34 733 A1 beschrieben. Die einzelnen Getriebegänge dieses Handschaltgetriebes werden durch einen Handschalthebel vorgewählt und geschaltet, der in mehreren parallelen Schaltgassen mit einer diese verbindenden Quergasse schwenkbar ist. Durch Vor- und Zurückschwenken des Wählhebels aus der neutralen Quergasse werden die einzelnen zugeordneten Getriebegänge geschaltet. Durch Bewegen des Schalthebels in dieser Quergasse werden die für den Schaltvorgang zu betätigenden Schaltelemente (Synchronisierkupplungen) vorgewählt. Die Bewegungen des Schalthebels in Schaltrichtung und in der quer dazu angeordneten Quergasse (Vorwählgasse) werden über eine Schaltstange auf eine Schaltwelle innerhalb des Getriebes übertragen. Diese innerhalb des Getriebes angeordnete Schaltwelle ist drehbar und axial verschieblich gelagert. Durch Vor- und Zurückschwenken des Wählhebels wird die Schaltwelle geschwenkt bzw. gedreht, wobei einer der beiden zugeordneten Getriebegänge geschaltet wird. Durch Querbewegung des Schalthebels in der Quergasse bzw. Vorwählgasse wird die Schaltwelle innerhalb des Getriebes axial verschoben, wobei jeweils eine von mehreren Schaltschienen mit der Schaltwelle gekoppelt wird.

Vom Bedienungsablauf vereinfachte Schaltvorrichtungen sind für automatische oder servounterstützte Getriebe bekannt. So ist aus DE-38 07 881 A1 eine Schaltvorrichtung mit H-förmiger Kulisse bekannt, in deren einer Gasse die für ein Automatikgetriebe bekannten Fahrstufen angewählt werden können und in einer dazu paralleln Gasse durch Vor- oder Zurückschwenken des Wählhebels aus einer Mittellage heraus einzelne Vorwärtsfahrstufen jeweils um einen Gang hoch- bzw. zurückgeschaltet werden können. Das Auslösen der Schaltbefehle erfolgt mittels elektrischer Kontaktschalter im Wählhebelbock, welche auf das elektronische Steuergerät des Automatikgetriebes wirken.

Aus FR-22 70 636 ist eine Schaltvorrichtung mit h-förmiger Schaltkulisse bekannt, in deren Hauptgasse ebenfalls durch Vor- oder Zurückschwenken einzelne Vorwartsfahrgange schrittweise hoch- bzw. zurückgeschaltet werden können. Aus einer federverrasteten Mittellage heraus kann der Wählhebel über eine Quergasse in eine Nebengasse bewegt werden, in welcher ein Rückwärtsgang schaltbar ist. In der Quergasse ist eine Neutralstellung geschaltet. Die einzelnen Stellungen des Wählhebels werden über elektrische Kontakte im Wählhebelbock detektiert und an einen elektrischen Schaltkreis zur Steuerung von Servomechanismen weitergeleitet. Diese Servos schalten am Getriebe die gewünschten Gänge.
Die beiden vorgenannten Schaltvorrichtungen erfordern spezielle Getriebe, welche erheblich teurer und aufwendiger sind als die üblichen Handschaltgetriebe.

Der Erfindung liegt daher die Aufgabe zugrunde, eine Schaltvorrichtung für eine vereinfachte Bedienung eines Handschaltgetriebes zu schaffen.

Die Lösung dieser Aufgabe gelingt mit den kennzeichenden Merkmalen des Patentanspruches 1.
Weitere, vorteilhafte Ausgestaltungen der Erfindung sind in den Unteransprüchen genannt.

Wenn bei einem Kraftfahrzeug, welches ein übliches Handschaltgetriebe aufweist, die Schaltvorrichtung für dieses Getriebe derart ausgebildet ist, daß mit dem Wählhebel in einer einzigen Schaltgasse einer Kulisse durch Vor- bzw. Zurückschwenken schrittweise alle Vorwärtsgänge aufwärts bzw. abwärts schaltbar sind, indem der Wählhebel mit einer Übertragungseinrichtung verbunden ist, welche die Schwenkbewegung des Wählhebels in eine Bewegung eines Zwischengliedes übersetzt und dieses ein Kulissenwerk so verschiebt, daß ein in diesem geführter, mit dem der Schaltbewegung zugeordneten Übertragungsglied verbundener Gleitstein in eine von zwei Endlagen verschoben wird, so ist die Bedienung des Getriebes stark vereinfacht, da der Wählhebel lediglich vor- oder zurückbewegt werden muß, um die Vorwärtsgänge zu schalten.

Die mechanische Ankopplung vom Wählhebel an das Getriebe vermittelt der Bedienperson wie bei herkömmlichen Schaltvorricthungen eine Rückmeldung über den Schaltablauf und behält somit das Gefühl der Bedienperson, selber aktiv zu schalten, bei. Auch die Geschwindigkeit des Schaltablaufes wird nach wie vor von der Bedienperson bestimmt. Unabhängig davon, ob das Getriebe z.B. 4, 5, oder 6 Vorwärtsgänge aufweist und unabhängig davon, wo beispielsweise der erste Gang relativ zum zweiten Gang liegt, ist für die Bedienung der Vorwärtsgänge nur eine einzige Bewegungsrichtung erforderlich. Diese erfordert kein spezielles Lernen darüber, wie der Wählhebel zu führen ist.

Diese Schaltvorrichtung läßt sich an jedes beliebige H- oder Doppel-H-Schaltbild eines Handschaltgetriebes adaptieren, so daß sie beispielsweise als Baukasten wahlweise anstelle der bekannten Schaltvorrichtung angeboten werden kann.
In Abhängigkeit der Einbauverhältnisse im Kraftfahrzeug kann die gesamte Schaltvorrichtung in dem den Wählhebel aufnehmenden Wählbock integriert sein oder sie ist bis auf den Wählhebel und dessen Kulisse am Getriebe oder getriebenah angeordnet. In letzterem Fall ist zwischen Wählhebel und der Übertragungseinrichtung z.B. ein flexibles Gestänge angeordnet.
Diese Schaltvorrichtung benötigt keinerlei Hilfsenergien und besitzt daher im Zusammenhang mit dem mechanischen Aufbau einen hohen Wirkungsgrad. Dieser mechanische Aufbau bietet größtmögliche Flexibilität in der Auslegung der einzelnen mechanischen Elemente, so daß z.B. ein gewünschtes Weg-Kraftverhältnis für den Wählhebel einstellbar ist.

Für die Ausgestaltung der die Schwenkbewegung des Wählhebels in eine z.B. lineare Bewegung des Zwischengliedes umsetzenden Übertragungseinrichtung und für das Kulissenwerk, welches den die Schaltbewegung übertragenden Gleitstein in eine von zwei Endlagen bewegt und somit das dementsprechende Übertragungsglied in an sich bekannter Weise vor und zurück bewegt, stehen dem Fachmann eine Vielzahl von Lösungen zur Verfügung. Eine mögliche Ausgestaltung wird im Zusammenhang mit den beigefügten Figuren später näher erläutert.

Der Gleitstein läßt sich in vorteilhafter Weise bewegen, weil das Kulissenwerk zumindest zwei relativ zueinander verschiebbare, z.B. als Schaltplatten ausgebildete, jeweils eine Schaltkulisse aufweisende Kulissenelemente aufweist. Der Gleitstein durchsetzt beide Schaltkulissen und wird durch die Relativbewegung auf einer Bewegungsbahn zwangsweise zwischen diesen beiden Endlagen hin- und hergeführt. Dabei ist in jeder Endlage ein Vorwärtsgang geschaltet, beispielsweise in einer Endlage alle ungeraden Gangzahlen 1, 3 und 5 und in der anderen die geraden 2, 4 und 6.

Eine einfache Ausgestaltung der Schaltkulissen ist gegeben, weil zwischen den Schaltplatten und dem Zwischenglied ein an sich bekanntes Umschaltwerk angeordnet ist, welches bei jeder Schwenkbewegung des Wählhebels die Schaltplatten alternierend zueinander bewegt. Dieses führt dazu, daß unabhängig von der Schwenkrichtung des Wählhebels, also z.B. unabhängig davon, ob die Bedienperson schrittweise die Vorwärtsgänge hochschaltet oder aber zwischen Hoch- und Zurückschalten wechselt, die Schaltplatten eine wenig Bauraum beanspruchende Bewegung zueinander machen, die entkoppelt von der aktuellen Bewegungsrichtung des Wählhebels den Gleitstein wechselweise vor und zurück bewegt.

Die Übertragung der Vorwählbewegung auf das Getriebe erfolgt mit Hilfe eines Schrittschaltwerkes, welches vom Wählhebel aus fortgeschaltet wird und auf das dafür vorgesehene Übertragungsglied wirkt. Solche Schrittschaltwerke sind an sich aus Getrieben für Motorräder bekannt und dienen dort der gemeinsamen Übertragung von Vorwähl- und Schaltbewegung. In der erfindungsgemäßen Schaltvorrichtung weist das Schrittschaltwerk eine Scheibe mit einer Kulisse auf, in welcher ein Gelenkhebel derart gelagert ist, daß die schrittweise Rotation der Scheibe in die notwendige Vorwählbewegung umgesetzt wird.

In weiterer vorteilhafter Ausgestaltung ist aus jedem beliebigen Gang die Anwahl einer für diesen Gang individuellen Leerlaufstellung möglich. Hierfür weist das Kulissenwerk eine dritte Schaltplatte mit vom Gleitstein durchsetzter Schaltkulisse auf, wobei die Bewegung dieser Schaltplatte den Gleitstein entlang seiner Bewegungsbahn in eine zwischen den Endlagen liegende, diesem Leerlauf entsprechende Mittellage verschiebt.

In ähnlicher Weise läßt sich für einen Rückwärtsgang eine weitere Schaltplatte mit Schaltkulisse anordnen, die den Gleitstein in eine diesem Gang entsprechende Position verschiebt.

Die vorbeschriebenen Vorwärts- und Rückwärtsgänge bzw. die Leerlaufstellungen lassen sich in einer für die Bedienung einfachen Weise mit einer einzigen Schaltgasse für den Wählhebel anwählen, wobei der Wählhebel lediglich aus seiner Mittellage vor- oder zurückgeschwenkt wird. Eine über den aktuell eingelegten Gang informierende optische Ganganzeige kann in bekannter Weise, beispielsweise in der Instrumententafel, integriert sein.

Ist eine Trennung der Vorwärtsgänge von den übrigen Sonderstellungen gewünscht oder erforderlich, so kann diese über eine einfache H-förmige Kulisse des Wählhebels erfolgen. Die einfache Bedienung aller Vorwärtsgänge in einer einzigen Schaltgasse bleibt dabei erhalten. Über eine Quergasse ist der Wählhebel in eine parallel zur Schaltgasse liegende Nebengasse schwenkbar. In vorteilhafter Weise ist der Wählhebel durch die Querbewegung von dem Zwischenglied entkoppelbar, so daß in der Nebengasse keine Vorwärtsgänge schaltbar sind. Die Querbewegung betätigt gleichzeitig die dritte Schaltplatte und stellt somit den dem jeweiligen Vorwärtsgang zugeordneten Leerlauf über die Mittellage des Gleitsteines ein. Durch Verschwenken des Wählhebels in der Nebengasse wird das den Rückwärtsgang einstellende weitere Kulissenelement verschoben.

Eine weitere, vorteilhafte Ausgestaltung ist möglich, wenn die Nebengasse eine Schnellschaltposition aufweist, in die der Wählhebel durch zum Rückwärtsgang entgegengesetztes Verschwenken gebracht werden kann. Hierfür ist der Wählhebel mit einem Hebelwerk versehen, welches derart auf das Schrittschaltwerk einwirkt, daß dieses in der Schnellschaltpositon in die dem ersten Vorwärtsgang zugeordnete Vorwählstellung zurückgedreht wird. Mit dieser Funktion kann in einfacher Weise z.B. im Stand vor einer roten Ampel aus einem beliebigen Vorwärtsgang unmittelbar die dem ersten Vorwärtsgang zugeordnete Vorwählgasse im Getriebe angewählt werden, so daß ein erneutes Anfahren durch einmaliges Verschwenken des Wählhebels in der Schaltgasse in den ersten Vorwärtsgang erfolgen kann.

Durch die Lage der Gänge im Getriebe und durch die Bewegungsübertragung zwischen Wählhebel und Getriebe auftretende Toleranzen können in einfacher, vorteilhafter Weise durch die Gestaltung der Schaltkulissen ausgeglichen werden. Da die Festhaltung der Gänge im Getriebe erfolgt, muß der Gleitstein in seinen Endlagen nicht formschlüssig von den Schaltkulissen gehalten werden, so daß diese für einen durch eventuelle Toleranzen verursachten, erforderlichen Überweg des Gleitsteines ausgelegt werden können.

Die Erfindung wird nachfolgend an Hand einer Zeichnung näher erläutert.
Es zeigen
- Fig. 1: eine schematische Seitenansicht einer Schaltvorrichtung mit einem Wählhebel in Mittelstellung,
- Fig. 2: eine Ansicht ähnlich Fig. 1 mit einem in eine Schaltstellung verschwenkten Wählhebel,
- Fig. 3: eine perspektivische Ansicht einer Schaltvorrichtung,
- Fig. 4: die Schaltvorrichtung gemäß Fig. 3 aus einer anderen Richtung und
- Fig.5a-5c: ein Schaltschema mit optischer Ganganzeige für verschiedene Wählhebelstellungen.

Eine Schaltvorrichtung für ein nicht gezeigtes Handschaltgetriebe eines Kraftfahrzeuges weist einen in einem nicht gezeigten Wählbock manuell in mehrere Stellungen in einer Kulisse 1 verschwenkbaren Wählhebel 2 auf. Dieser ist in eine Fahrtrichtung F des Kraftfahrzeuges um eine Querachse X-X und quer dazu um eine Längsachse A-A schwenkbar. Zwischen dem Getriebe und dem Wählhebel 2 sind ein erstes und ein zweites, als Seilzüge 3 und 4 ausgebildetes Übertragunsglied angeordnet, wobei der erste Seilzug 3 Schaltbewegungen und der zweite Seilzug 4 Vorwählbewegungen an das Getriebe überträgt.

Der Wählhebel 2 ist in einer einzigen Schaltgasse 5 der Kulisse 1 aus einer federverrasteten Mittelstellung M heraus in Vorwärtsgänge G1, G2, ... G6 schrittweise durch Vor- oder Zurückschwenken in eine Richtung V oder Z schaltende Schaltstellungen 6 oder 7 bewegbar. Im Bereich der Mittelstellung M ist eine Quergasse 8 angeordnet, welche in eine parallel zur Schaltgasse 5 verlaufende Nebengasse 9 mündet. In dieser Nebengasse 9 sind durch Verschwenken des Wählhebels in Richtung V bzw. Z eine Stellung 10 für einen Rückwärtsgang R bzw. eine Stellung 11 für eine später erläuterte Schnellschaltung Q anwählbar. Das Querschwenken des Wählhebels 2 in der Quergasse 8 wählt eine einem Leerlauf entsprechende Neutralstellung N an, wobei der Wählhebel 2 eine Mittelstellung M' erreicht.

Der Wählhebel 2 ist an seinem unterhalb der Kulisse 1 liegenden Ende mit einer U-förmigen Gabelung 15 versehen, welche fest mit einem um die Querachse X-X schwenkbaren Bolzen 16 verbunden ist. Beim Verschwenken in der Quergasse 8 kippt der Wählhebel 2 mit der Gabelung 15 und dem Bolzen 16 um einen im Wählbock orstfest gelagerten Stift 17, welcher um die Längsachse A-A schwenkbar ist.
Der Wählhebel 2 ist weiterhin mit einem in Fahrtrichtung F verlaufenden, schwalbenförmigen Geberhebel 18 versehen, dessen Enden abgerundete Kontaktflächen 19,20 aufweisen.
Diese Kontaktflächen 19, 20 stehen in Mittelstellung M mit einem als Gegenstück ausgebildeten T-förmigen Zwischenglied in Kontakt, welches linear in einer Richtung B verschiebbar ist. Dieses Zwischenglied besteht aus einem mit Gegenflächen 21, 22 versehenen Nehmerhebel 23 und einem quer zur Gabelung 15 angeordneten U-förmigen Bügel 24.
Der wählhebelfeste Geberhebel 18 bildet gemeinsam mit dem Nehmerhebel 23 eine Übertragungseinrichtung, welche die Schwenkbewegungen des Wählhebels in der Schaltgasse 5 in eine lineare Bewegung des Zwischengliedes in Richtung B übersetzt.

Die Schaltvorrichtung weist weiterhin ein aus mehreren Kulissenelementen bestehendes Kulissenwerk auf, wobei die Kulissenelemente als mit Schaltkulissen 25, 26 und 27 versehene Schaltplatten 28, 29 und 30 ausgebildet sind. Diese Schaltplatten sind auf einer ortsfesten Welle 31 unabhängig voneinander drehbar gelagert. Der Bügel 24 umgreift unter Zwischenschaltung eines nicht näher gezeigten Umschaltwerkes 32 eine erste und eine zweite Schaltplatte 28 und 29 und übersetzt dabei die lineare Bewegung in ein abwechselndes Schwenken der Platte 28 oder 29 um die Welle 31. Die Schaltkulissen 25, 26, 27 werden von einem als Stange 33 ausgebildeten Gleitstein durchsetzt, welcher mittels der durch die Schaltkulissenform definierten Kurvenbahnen 34, 35 und 36 entlang einer Bewegungsbahn 37 verschiebbar ist.

Die Stange 33 ist mittels benachbart der Platten 28, 29 und 30 verlaufender Schwenkhebel 38, 39 und 40 fest mit einer ortsfesten, drehbar um eine Achse D-D gelagerten Hülse 41 verbunden, welche über einen Abtriebshebel 42 den ersten Seilzug 3 betätigt. Zur Übermittlung der Vorwählbewegung über den zweiten Seilzug 4 an das Getriebe weist die Schaltvorrichtung ein Schrittschaltwerk 43 mit einem Fingerhebel 44 und einer mit Zapfen versehenen Steuerscheibe 45 auf, welches vom Geberhebel 18 fortgeschaltet wird.

Diese Scheibe 45 gibt über einen zweigeteilten Gelenkhebel 46 ihre schrittweise Rotation an den zweiten Seilzug 4 weiter.

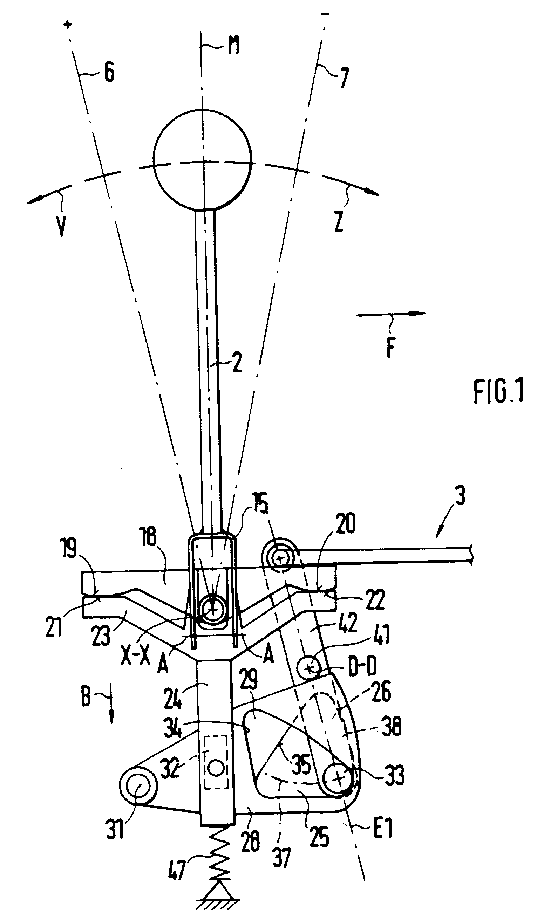

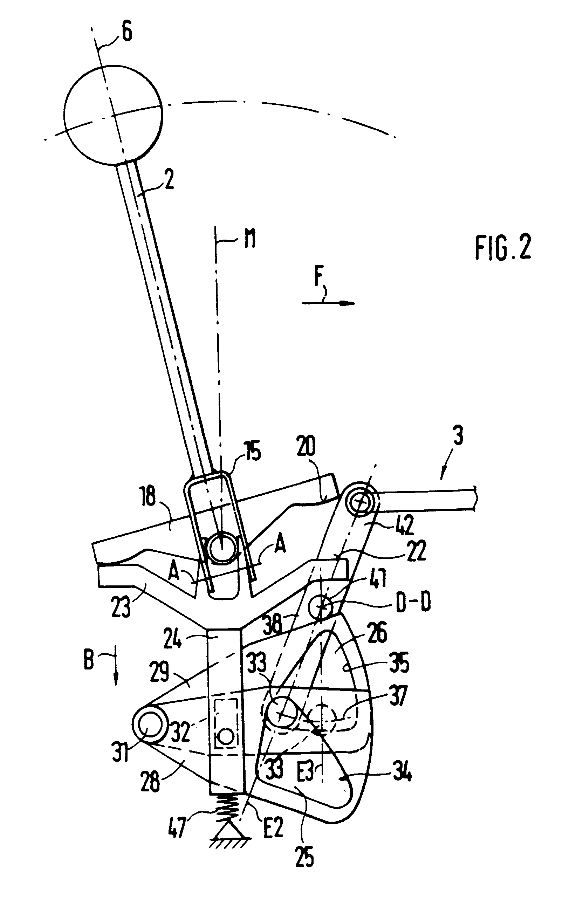

Das schrittweise Fortschalten der Vorwärtsgänge G1 bis G6 wird nachfolgend anhand der zu diesem Zweck vereinfachten, schematischen Darstellungen in Fig. 1 und Fig. 2 erläutert. Während des Fahrbetriebes des Kraftfahrzeuges ist beispielsweise der vierte Vorwärtsgang G4 geschaltet. Alle geradzahligen Vorwärtsgänge G2, G4 und G6 sind einer ersten, auf der Bewegungsbahn 37 der Stange 33 liegenden Endstellung E1 zugeordnet. Die erste und die zweite Schaltplatte 28 und 29 sind deckungsgleich zueinander gestellt. Der Bügel 24 wird von einer Druckfeder 47 entgegen der Richtung B in einer oberen Stellung gehalten, so daß sich die korrespondierenden Flächen 19 und 21 bzw. 20 und 22 berühren und der Wählhebel 2 in seiner nicht betätigten Mittelstellung M steht.

Soll jetzt der nächsthöhere Vorwärtsgang G5 geschaltet werden, so wird nach dem Betätigen einer üblichen, nicht gezeigten Trennkupplung der Wählhebel 2 gemäß Fig. 2 in Richtung V in seine Schaltstellung 6 verschwenkt. Geberhebel 18 verschiebt dabei über Kontaktfläche 19 den Nehmerhebel 23 in Richtung B abwärts. Das Umschaltwerk 32 überträgt die Verschiebung auf die erste Schaltplatte 28, welche folglich um Welle 31 schwenkt. Stange 33 wird entlang der Kurvenbahn 34 dieser Platte 28 zwangsgeführt, wobei sie von ihrer ersten Endlage E1 aus entlang der Bewegungsbahn 37 in ihre zweite Endlage E2 gemäß Fig. 2 verschoben wird. Über Schwenkhebel 38, Hülse 41 und Abtriebshebel 42 wird diese Bewegung über den ersten Seilzug 3 in das Getriebe übertragen, so daß dort der fünfte Vorwärtsgang G5 eingelegt wird, welcher wie die restlichen ungeradzahligen Vorwärtsgänge G1 und G3 dieser zweiten Endlage E2 zugeordnet sind.

Der Wählhebel 2 kann unmittelbar nach dem Verschwenken in seine Schaltstellung 6 von der Bedienperson losgelassen werden. Er kehrt dann in seine Mittelstellung M und Bügel 24, Nehmerhebel 23 und Schaltplatte 28 aufgrund der Druckfeder 47 in die Ausgangsstellung gemäß Fig. 1 zurück.

Unabhängig von der darauf folgenden, nächsten Verschwenkrichtung V oder Z des Wählhebels 2, wird der Bügel 24 erneut in Richtung B verschoben und schwenkt über das alternierend arbeitende, jetzt die zweite Schaltplatte 29 verschiebende Umschaltwerk 32 die Stange 33 erneut in die Endlage E1. Ob dabei der nächsthöhere oder nächstniedrigere Gang G6 oder G4 geschaltet wird, hängt von der durch die gewählte Schaltstellung 6 oder 7 auf das Schrittschaltwerk 43 übertragene Vorwählbewegung ab. Diese wird über das bei jedem Schwenken des Wählhebels 2 in Richtung V oder Z schrittweise Weiterdrehen der Steuerscheibe 45 über den zweiten Seilzug 4 in das Getriebe übertragen.

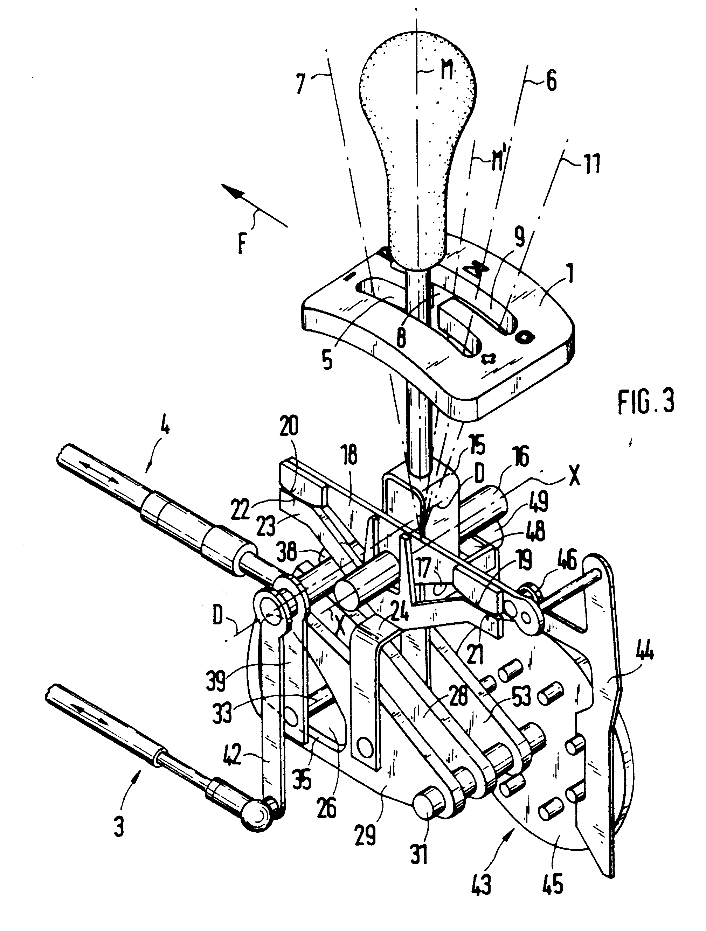

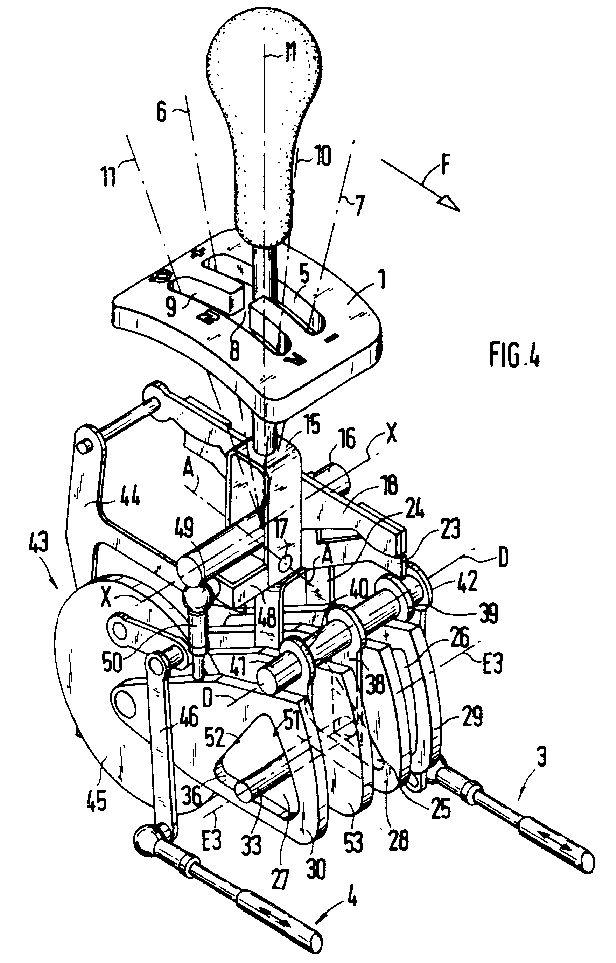

Ist die Schaltvorrichtung z.B. für alltagstaugliche Kraftfahrzeuge vorgesehen, kann die Kulisse 1 gemäß der Figuren 3 und 4 um die Sonderfunktionen Rückwärtsgang R und Schnellschaltung Q ergänzt werden.
Ein Verschwenken des Wählhebels 2 um die Längsachse A-A in die Quergasse 8 bis in eine Mittellage M' der Nebengasse 9 entkoppelt den Nehmerhebel 23 vom Geberhebel 18, der weiterhin auf die Steuerscheibe 45 wirkt.
Ein von der Gabelung 15 abragender Flansch 48 verschiebt dabei gemäß Fig. 4 über ein Kugelgelenk 49 einer Kuppelstange 50 die dritte Schaltplatte 30 abwärts. Je nach Endlage E1 oder E2 der Stange 33 verschieben Flanken 51 oder 52 der Kurvenbahn 36 diese Stange 33 in eine zwischen diesen Endlagen E1 und E2 liegende Mittellage E3, wodurch über den ersten Seilzug 3 eine Neutralstellung des Getriebes eingelegt wird. Diese Stellung entspricht bei üblichen Schaltvorrichtungen dem Zustand, der nach dem Treten der Kupplung und dem Verschwenken des Wählhebels in die querliegende Vorwählgasse erreicht wird. Somit wird durch die Neutralstellung N des Wählhebels 2 ein dem jeweils zuvor eingelegten Gang zugeordneter Leerlauf eingestellt.
Der Wählhebel 2 kann in dieser Stellung N verbleiben oder nach dem Loslassen selbsttätig in die Mittellage M zurückkehren. Aus dieser Stellung N heraus kann durch Verschwenken in Richtung Z ein Rückwärtsgang R geschaltet werden. Hierfür kann das Kulissenwerk eine weitere mit einer Schaltkulisse versehene Schaltplatte 53 aufweisen, welche über den Schwenkhebel 40 auf die Hülse 41 wirkt. Durch ein entsprechendes Verschwenken dieser Schaltplatte 53 wird die Stange 33 in die eine Endlage E1 oder E2 verschoben, der getriebeintern der Rückwärtsgang R zugeordnet ist.

Durch entgegengesetztes Verschwenken des Wählhebels 2 in der Nebengasse 9 wird die der Schnellschaltung Q zugeordnete Schaltstellung 11 erreicht, welche unabhängig vom zuvor eingelegten Vorwärtsgang G1 ... G6 den Fingerhebel 44 von der Steuerscheibe 46 entkoppelt und diese soweit zurückdreht, daß mit einem daran anschließenden Verschwenken des Wählhebels 2 in die Schaltstellung 6 der erste oder zweite Vorwärtsgang G1 oder G2 geschaltet werden kann. Somit entfällt z.B. beim Stehen vor einem Hindernis, das sonst erforderliche, mehrfache Herunterschalten durch dementsprechend häufiges Verschwenken des Wählhebels 2 in die Schaltstellung 7.

Die zuvor beschriebenen Sonderfunktionen können ohne weiteres auch mit einer Kulisse 1 realisiert werden, welche nur die einzige Schaltgasse 5 aufweist. Dabei sind die Stellungen Q und R ebenfalls über ein Verschwenken des Wählhebels in die Schaltstellungen 6 und/oder 7 schaltbar. Eine der Abfolge der Gänge entsprechende optische Informationseinheit 55 übermittelt dabei der Bedienperson den aktuellen gewählten Gang und z.B. alle von dort aus direkt erreichbaren weiteren Gänge.
Die Abfolge der schaltbaren Gänge ist abhängig von der jeweils verwendeten Kulisse an die speziellen Erfordernisse anpassbar. So kann diese Abfolge z.B. R, NL, G1, G2 ..... G6 lauten, wobei NL dem tatsächlichen Motorleerlauf entspricht und zwischen jedem Gang G1 bis G6 die dort liegende Neutralstellung N angewählt werden kann.
Eine weitere Abfolge wäre z.B. R, G1, NL, G2, G3 ... G6.

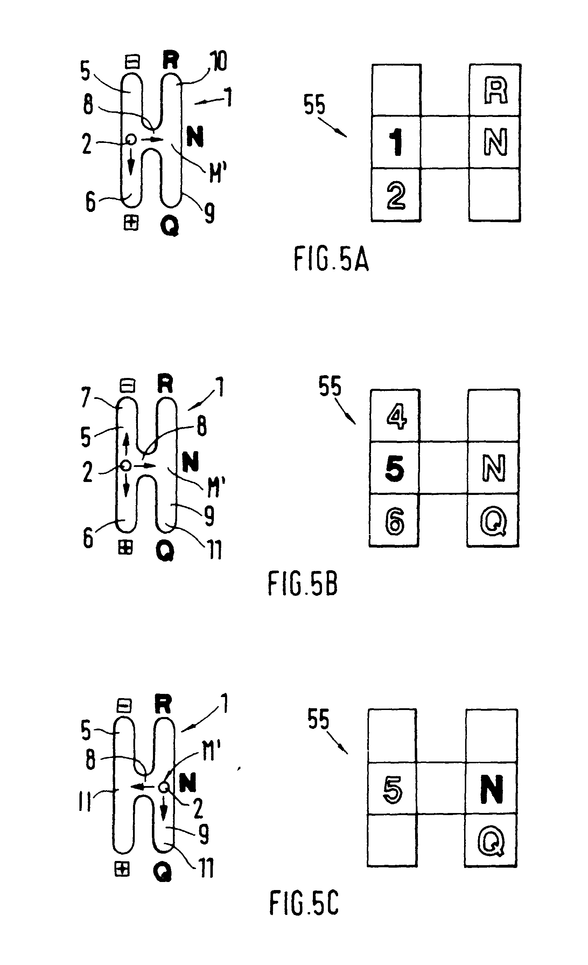

Ein mögliches H-Schaltschema mit einer optischen Anzeige ist für die Schaltvorrichtung in Fig. 5 gezeigt, wobei Richtungspfeile die möglichen Schaltungen mit dem Wählhebel 2 im Schaltschema andeuten. Fig. 5a zeigt einen eingelegten ersten Gang G1, von welchem aus direkt die Schaltstellung 6 für den zweiten Gang G2 oder die Mittelstellung M' für die Neutralposition N und ggf. den Rückwärtsgang R in Schaltstellung 10 erreichbar sind.

Gemaß Fig. 5b ist vom eingelegten fünften Gang G5 aus jeweils der benachbarte vierte bzw. sechste Gang G4 bzw. G6 oder die Mittelstellung M' für die Neutralposition N und ggf. Schaltstellung 11 für die Schnellschaltung Q schaltbar. Bei einem aus dem fünften Gang G5 heraus eingelegten Leerlauf gemäß Fig. 5c, kann aus der dafür vorgesehenen Stellung M' heraus zurück in diesen Gang G5 oder auf die Schaltstellung 11 für das Zurückdrehen des Schrittschaltwerkes 43 geschaltet werden.
Das Einlegen des Rückwärtsganges R kann ggf. an die übliche Betätigung einer Sperre gebunden sein.
Ebenso können unzulässige Rückschaltungen, welche beispielsweise den Motor überdrehen könnten, durch eine in die Motorsteuerung integrierte Steuereinheit und von ihr betätigter mechanischer Sperren, unterdrückt werden.

## Patentansprüche

1. Schaltvorrichtung für ein Handschaltgetriebe eines Kraftfahrzeuges, mit einem manuell in mehrere Stellungen einer Ebene verschwenkbaren Wählhebel, und mit zwischen dem Wählhebel und dem Handschaltgetriebe angeordneten Übertragungsgliedern, wobei zumindest Vorwärtsgänge des Getriebes durch Vor- oder Zurückschwenken des Wählhebels aus einer Mittelstellung heraus geschaltet werden, und durch das Vor- bzw. Zurückschwenken des Wählhebels (2) in einer einzigen Ebene alle Vorwärtsgänge (G1....G6) schrittweise aufwärts bzw. abwärts schaltbar sind, und der Wählhebel (2) mit einer Übertragungseinrichtung (18, 23) verbunden ist, welche dessen Schwenkbewegung in eine Bewegung eines Zwischengliedes (23, 24) übersetzt und dieses Zwischenglied (23, 24) ein Kulissenwerk (28, 29, 30, 53) derart verschiebt, daß ein in diesem Kulissenwerk zwangsgeführter Gleitstein (33) in zwei Endlagen (E1, E2) verschoben wird, **dadurch gekennzeichnet**, daß alle Vorwärtsgänge durch Verschwenken des Wählhebels in einer einzigen Schaltgasse (5) einer Kulisse geschaltet werden, daß die Übertragungsglieder getrennt voneinander eine Vorwähl- und eine Schaltbewegung übertragen, daß das Kulissenwerk (28, 29, 30, 53) aus mindestens zwei durch das Zwischenglied (23, 24) relativ zueinander verschiebbaren Kulissenelementen (28, 29) besteht, welche mit von dem Gleitstein (33) durchgesetzten Schaltkulissen (25, 26) versehen sind, wobei eine Bewegungsbahn (37) des mit dem der Schaltbewegung zugeordneten Übertragungsglied (3) verbundenen Gleitsteines (33) zwischen dessen Endlagen (E1, E2) durch die relative Verschiebung der beiden Schaltkulissen (25, 26) zueinander festgelegt ist und in jeder Endlage (E1 ; E2) mindestens ein Vorwärtsgang (G2, G4, G6; G1, G3, G5) geschaltet ist, und daß zwischen den Kulissenelementen (28, 29) und dem Zwischenglied (23, 24) ein Umschaltwerk (32) derart angeordnet ist, daß durch jede Schwenkbewegung des Wählhebels (2) in der Schaltgasse (5) die Kulissenelemente (28, 29) alternierend zueinander verschoben sind.

2. Vorrichtung nach Anspruch 1, **dadurch gekennzeichnet**, daß das Kulissenwerk ein drittes Kulissenelement (30) mit einer von dem Gleitstein (33) durchsetzten dritten Schaltkulisse (27) aufweist, wobei die Verschiebung dieses dritten Kulissenelementes (30) den Gleitstein (33) auf seiner Bewegungsbahn (37) in eine zwischen dessen Endlagen (El, E2) angeordnete, einem Leerlauf des Getriebes entsprechende Mittellage (E3) verschiebt.

3. Vorrichtung nach Anspruch 1 oder 2, **dadurch gekennzeichnet**, daß das Kulissenwerk ein weiteres Kulissenelement (53) mit einer von dem Gleitstein (33) durchsetzten, weiteren Schaltkulisse aufweist, wobei die Verschiebung dieses weiteren Kulissenelementes (53) den Gleitstein (33) auf seiner Bewegungsbahn (37) in eine einem Rückwärtsgang (R) des Getriebes entsprechende Position verschiebt.

4. Vorrichtung nach Anspruch 3, **dadurch gekennzeichnet**, daß die Kulisse (1) des Wählhebels (2) nur die einzige Schaltgasse (5) aufweist, in welcher durch das Verschwenken des Wählhebels (2) sowohl jeder Vorwärtsgang (G1...G6) als auch der Rückwärtsgang (R)und eine Leerlaufstellung des Getriebes schaltbar ist.

5. Vorrichtung nach Anspruch 3, **dadurch gekennzeichnet**, daß die Kulisse (1) des Wählhebels (2) benachbart seiner Mittellage (M) eine Quergasse (8) aufweist, welche in eine parallel zur Schaltgasse (5) verlaufend angeordnete Nebengasse (9) mündet.

6. Vorrichtung nach Anspruch 2 und 5, **dadurch gekennzeichnet,** daß durch Verschwenken in der Quergasse (8) der Wählhebel (2) von dem Zwischenglied (23, 24) entkoppelt, das dritte Kulissenelement (30) die Mittellage (E3) des Gleitsteines (33) einstellend verschiebt.

7. Vorrichtung nach Anspruch 3 und 6, **dadurch gekennzeichnet,** daß der Wahlhebel (2) durch Verschwenken in der Nebengasse (9) das weitere Kulissenelement (53) den Rückwärtsgang (R) einstellend verschiebt.

8. Vorrichtung nach Anspruch 7, **dadurch gekennzeichnet,** daß der Wählhebel (2) durch entgegengesetztes Verschwenken in der Nebengasse (9) in eine Schnellschaltposition (Q) ein Schrittschaltwerk (43) betätigt, welches mit dem der Vorwählbewegung zugeordneten Übertragungsglied (4) verbunden ist, wobei in dieser Position (Q) eine dem ersten Vorwärtsgang (G1) zugeordnete Vorwählstellung am Getriebe eingestellt ist.

## Claims

1. A gear-shift device for a manually operated gearbox of a motor vehicle, with a selector lever pivotable manually into a plurality of positions in one plane, and with transmission members arranged between the selector lever and the manually operated gearbox, wherein at least forward gears of the gearbox are shifted by pivoting the selector lever forwards or backwards out of a central position, and all the forward gears (**G1** ... **G6**) can be shifted up or down in steps by pivoting the selector lever (2) forwards or backwards in a single plane, and the selector lever (2) is connected to a transmission device (18, 23) converting the pivoting movement of the said selector lever (2) into a movement of an intermediate member (23, 24), and the said intermediate member (23, 24) displaces a slide-block mechanism (28, 29, 30, 53) in such a way that a slide pin (33) forcibly guided in the said slide-block mechanism is displaced into two end positions (**E1**, **E2**), **characterized in that** all the forward gears are shifted by pivoting the selector lever in a single gear-shift gate (5) of a slide block, the transmission members transmit a pre-selection movement and a gear-shift movement separately from each other, the slide-block mechanism (28, 29, 30, 53) comprises at least two slide-block members (28, 29) displaceable relative to each other by the intermediate member (23, 24) and provided with gear-shift slide blocks (25, 26) traversed by the slide pin (33), wherein a path of movement (37) of the slide pin (33) connected to the transmission member (3) associated with the gearshifting movement is fixed between the end positions (**E1**, **E2**) of the said slide pin (33) by the relative displacement of the two gear-shift slide blocks (25, 26) towards each other, and at least one forward gear (**G2**, **G4**, **G6**; **G1**, **G3**, **G5**) is shifted in each end position (**E1**; **E2**), and a change-over mechanism (32) is arranged between the slide-block members (28, 29) and the intermediate member (23, 24) in such a way that the slide-block members (28, 29) are displaced towards each other in an alternate manner by each pivoting movement of the selector lever (2) in the gear-shift gate (5).

2. A device according to Claim 1, **characterized in that** the slide-block mechanism has a third slide-block member (30) with a third gear-shift slide block (27) transversed by the slide pin (33), wherein the displacement of the said third slide-block member (30) displaces the slide pin (33) on its path of movement (37) into a central position (**E3**) situated between the end positions (**E1**, **E2**) of the said slide pin (33) and corresponding to idling of the gearbox.

3. A device according to Claim 1 or 2, **characterized in that** the slide-block mechanism has a further slide-block member (53) with a further gear-shift slide block transversed by the slide pin (33), wherein the displacement of the said further slide-block member (53) displaces the slide pin (33) on its path of movement (37) into a position corresponding to a reverse gear (**R**) of the gearbox.

4. A device according to Claim 3, **characterized in that** the slide block (1) of the selector lever (2) comprises only the single gear-shift gate (5) in which both each forward gear (**G1** ... **G6**) and the reverse gear (R) and an idling setting of the gearbox can be shifted by pivoting the selector lever (2).

5. A device according to Claim 3, **characterized in that** the slide block (1) of the selector lever (2) comprises a transverse gate (8) adjacent to its central position (M), the transverse gate (8) opening into an auxiliary gate (9) extending parallel to the gear-shift gate (5).

6. A device according to Claims 2 and 5, **characterized in that** by pivoting in the transverse gate (8) the selector lever (2), disconnected from the intermediate member (23, 24), displaces the third slide-block member (30) so as to set the central position (**E3**) of the slide pin (33).

7. A device according to Claims 3 and 6, **characterized in that** by pivoting in the auxiliary gate (9) the selector lever (2) displaces the further slide-block member (53) so as to set the reverse gear (**R**).

8. A device according to Claim 7, **characterized in that** by pivoting in the opposite direction in the auxiliary gate (9) into a rapid-gear-shift position (**Q**) the selector lever (2) actuates a stepped gear-shift mechanism (43) connected to the transmission member (4) associated with the pre-selection movement, wherein a pre-selection position - associated with the first forward gear (**G1**) - on the gearbox is set in this position (**Q**).

## Revendications

1. Dispositif de changement de vitesse pour une boîte de vitesses manuelle d'un véhicule automobile, comportant un levier de sélection pivotable manuellement dans plusieurs positions d'un plan, et comportant des organes de transmission, placés entre le levier de sélection et la boîte de vitesses manuelle, dans lequel au moins les marches avant de la boîte de vitesses sont commandées par pivotement vert l'avant ou vers l'arrière du levier de sélection, à partir d'une position centrale, et par pivotement vers l'avant ou vers l'arrière du levier de sélection (2) dans un seul plan, toutes les marches avant (G1 ... G6) peuvent être progressivement avancées ou rétrogradées, et le levier de sélection (2) est relié à un dispositif de transmission (18, 23), qui convertit son mouvement de pivotement en un mouvement d'un organe intermédiaire (23, 24) et cet organe intermédiaire (23, 24) déplace un mécanisme à coulisse (28, 29, 30, 53), de manière qu'un coulisseau (33), guidé par force dans ce mécanisme à coulisse, est déplacé dans deux positions de fin de course (E1, E2), caractérisé en ce que toutes les marches avant sont commandées par pivotement du levier de sélection dans une seule voie de commutation (5) d'une coulisse, en ce que les organes de transmission transmettent, indépendamment les uns des autres, un mouvement de présélection et un mouvement de commutation, en ce que le mécanisme à coulisse (28, 29, 30, 53) est constitué d'au moins deux éléments à coulisse (28, 29), déplaçables l'un par rapport à l'autre, par l'organe intermédiaire (23, 24), lesquels éléments à coulisse sont pourvus de coulisses de commutation (25, 26) traversées par le coulisseau (33), une trajectoire (37) du coulisseau (33), reliée à l'organe de transmission (3) associé au mouvement de commutation, étant définie entre ses positions de fin de course (E1, E2), par le déplacement relatif des deux coulisses de commutation (25, 26) l'une par rapport à l'autre et dans chaque position de fin de course (E1 ; E2), au moins une marche avant (G2, G4, G6 ; G1, G3, G5) est commandée et en ce qu'entre les éléments à coulisse (28, 29) et l'organe intermédiaire (23, 24), un mécanisme de commutation (32) est placé de manière que par chaque mouvement de pivotement du levier de sélection (2) dans la voie de commutation (5), les éléments à coulisse (28, 29) sont déplacés en alternance l'un par rapport à l'autre.

2. Dispositif selon la revendication 1, caractérisé en ce que le mécanisme à coulisse comporte un troisième élément à coulisse (30) avec une troisième coulisse de commutation (27), traversée par le coulisseau (33), le déplacement de ce troisième élément à coulisse (30) déplaçant le coulisseau (33) sur sa trajectoire (37), dans une position centrale (E3), située entre ses positions de fin de course (E1, E2), correspondant à un ralenti de la boîte de vitesses.

3. Dispositif selon la revendication 1 ou 2, caractérisé en ce que le mécanisme à coulisse comporte un troisième élément à coulisse (53) avec une autre coulisse de commutation, traversée par le coulisseau (33), le déplacement de cet autre élément à coulisse (53) déplaçant le coulisseau (33) sur sa trajectoire (37), dans une position correspondant à une marche arrière (R) de la boîte de vitesses.

4. Dispositif selon la revendication 3, caractérisé en ce que la coulisse (1) du levier de sélection (2) ne présente que la seule voie de commutation (5), dans laquelle, par le pivotement du levier de sélection (2), peut être commandée chaque marche avant (G1 ... G6) ainsi que la marche arrière (R) et une position de ralenti de la boîte de vitesses.

5. Dispositif selon la revendication 3, caractérisé en ce que la coulisse (1) du levier de sélection (2) présente au voisinage de sa position centrale (M), une voie transversale (8), qui débouche dans une voie annexe (9), parallèle à la voie de commutation (5).

6. Dispositif selon les revendications 2 et 5, caractérisé en ce que par pivotement dans la voie transversale (8), le levier (2), désaccouplé de l'organe intermédiaire (23, 24), déplace le troisième élément à coulisse (30), en sélectionnant la position centrale (E3) du coulisseau (33).

7. Dispositif selon les revendications 3 et 6, caractérisé en ce que le levier de sélection (2), par pivotement dans la voie annexe (9), déplace l'autre élément à coulisse (53), en sélectionnant la marche arrière (R).

8. Dispositif selon la revendication 7, caractérisé en ce que par pivotement opposé dans la voie annexe (9), dans une position de commutation rapide (Q), le levier de sélection (2) actionne un mécanisme pas à pas (43), qui est relié à l'organe de transmission (4), associé au mouvement de présélection, une position de présélection, associée dans cette position (Q) à la première marche avant (G1), étant sélectionnée dans la boîte de vitesses.
